Europäisches Patentamt

European Patent Office

Office européen des brevets

(19)

(11) Veröffentlichungsnummer: **0 108 856**
**A1**

(12) **EUROPÄISCHE PATENTANMELDUNG**

(21) Anmeldenummer: **82890168.6**

(22) Anmeldetag: **15.11.82**

(51) Int. Cl.³: **F 16 L 59/02, F 16 L 59/16**

(43) Veröffentlichungstag der Anmeldung: **23.05.84**
**Patentblatt 84/21**

(71) Anmelder: **Hackl, Norbert, Selker 2, A-4320 Pregarten (AT)**

(72) Erfinder: **Hackl, Norbert, Selker 2, A-4320 Pregarten (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(84) Benannte Vertragsstaaten: **AT BE CH DE FR GB IT LI LU NL SE**

(54) **Wärmeisolierung aus Schaumstoff.**

(57) Eine Wärmeisolierung aus Schaumstoff für heizungs- und kältetechnische Einrichtungen besteht, um bei einfacher Hantierbarkeit und hoher Isolierfähigkeit vor Beschädigungen geschützt und vor allem feuerbeständig zu sein, aus einem längsgeteilten Blechgehäuse (4), das Ausnehmungen (7, 8) zum Durchtritt von Armaturen (3) und Leitungen (2) aufweist, wobei in dieses Blechgehäuse (4) Schaumstoff als Innenauskleidung (5) eingeschäumt ist, die einen den Abmessungen der Einrichtung angepaßten Hohlraum (6) bildet.

EP 0 108 856 A1

ACTORUM AG

0108856

- 1 -

<u>Wärmeisolierung aus Schaumstoff</u>

Die Erfindung betrifft eine Wärmeisolierung aus Schaumstoff für wärme.technische Einrichtungen, wie Absperrorgane, Behälter u. dgl.

Bisher werden bei Heizungsanlagen praktisch immer nur die Rohrleitungen mit besonderen Isolierungen versehen, und es ist bekannt, dazu vorgefertigte Schaumstoffprofile zu verwenden. Diese halbzylindrischen Schaumstoffprofile werden paarweise auf die Rohre aufgesteckt und bilden einen gut isolierenden Mantel für die Rohrleitungen, wobei allerdings dieser selbst ungeschützte Mantel leicht beschädigt werden kann und auch nicht feuerbeständig ist. Absperrorgane, Speicherbehälter oder andere Einrichtungen der Heizanlage bleiben hingegen überhaupt ohne zusätzliche Isolierung, da es keine passenden Schaumstoffteile für diese Einrichtungen gibt und ein Isolieren mit Fasermaterial u. dgl. nicht nur mühsam ist, sondern darüber hinaus noch die Zugänglichkeit und Kontrollierbarkeit dieser Einrichtungen beeinträchtigt. Es werden daher auch eher Wärmeverluste im Bereich dieser Einrichtungen in Kauf genommen, als auf solche unpraktischen Isolierungen zurückgreifen zu müssen.

Der Erfindung liegt daher die Aufgabe zugrunde, diese Mängel zu beseitigen und eine Wärmeisolierung für Einrichtungen der Heizungs- und Kältetechnik zu schaffen, die trotz ihrer besonders einfachen Handhabung und hohen Isolierfähigkeit vor Beschädigungen weitgehend geschützt und vor allem auch feuerbeständig ist.

Die Erfindung löst diese Aufgabe durch ein längsgeteiltes, Ausnehmungen zum Durchtritt von Armaturen, Leitungen od. dgl. aufweisendes Blechgehäuse, in das der Schaumstoff als den Abmessungen der Einrichtungen angepaßte Innenauskleidung eingeschäumt ist. Es entsteht eine wirkungsvolle, durch das Blechgehäuse gut geschützte und vor allem auch feuersichere Fertigisolierung für Schieber, Behälter u. dgl., welche Fertigisolierung praktisch mit einem Handgriff durch das einfache Aufsetzen der Blechgehäuseteile mit ihrer Innenauskleidung auf die Einrichtung und ihr Zusammensetzen zum geschlossenen Gehäuse montiert ist. Die Innenauskleidung des geschlossenen Blechgehäuses bietet Platz zur Aufnahme der zu isolierenden Einrichtung, wobei Anschlußflansche od. dgl. ebenfalls in die Isolierung aufgenommen werden können. Die vorbereiteten Ausnehmungen ermöglichen einen ordnungsgemäßen Sitz der Isolierung auf der Einrichtung und gewährleisten auch deren einwandfreie Bedienung.

Günstig ist es, wenn erfindungsgemäß die freien Ränder der Blechgehäuseteile umgebördelt sind, da diese Bördelränder für eine gute Verbindung zwischen den Blechteilen und der eingeschäumten Innenauskleidung sorgen.

In einer vorteilhaften Ausgestaltung der Erfindung bestehen die Blechgehäuseteile aus einer vorzugsweise halbzylindrischen Schale und sich an Falzrändern dieser Schale abstützenden, über die eingeschäumte Innenauskleidung befestigten Stirnwänden. Die Herstellung dieser Blechgehäuseteile ist dadurch überaus einfach und billig, da die Blechteile des Gehäuses nur entsprechend vorgebogen werden müssen und dann ihre gegenseitige Verbindung gleichzeitig mit der Fertigstellung der Blechgehäuseteile durch das Einschäumen der Innenauskleidung erfolgt. '

Bildet erfindungsgemäß die Innenauskleidung in der Teilungsfläche einen Stufenfalz, ergibt sich eine zentrierende Zuordnung der Gehäuseteile beim Zusammensetzen und außerdem werden Kältebrücken in der Trennfuge vermieden.

Für das Zusammenhalten der Blechgehäuseteile im montierten Zustand gibt es verschiedenste Möglichkeiten, doch ist es besonders zweckmäßig, wenn zur gegenseitigen Verbindung der Blechgehäuseteile Metallbänder mit Spannverschlüssen vorgesehen sind, die mit wenig Aufwand eine feste, anpaßbare und auch leicht bedienbare Halterung darstellen.

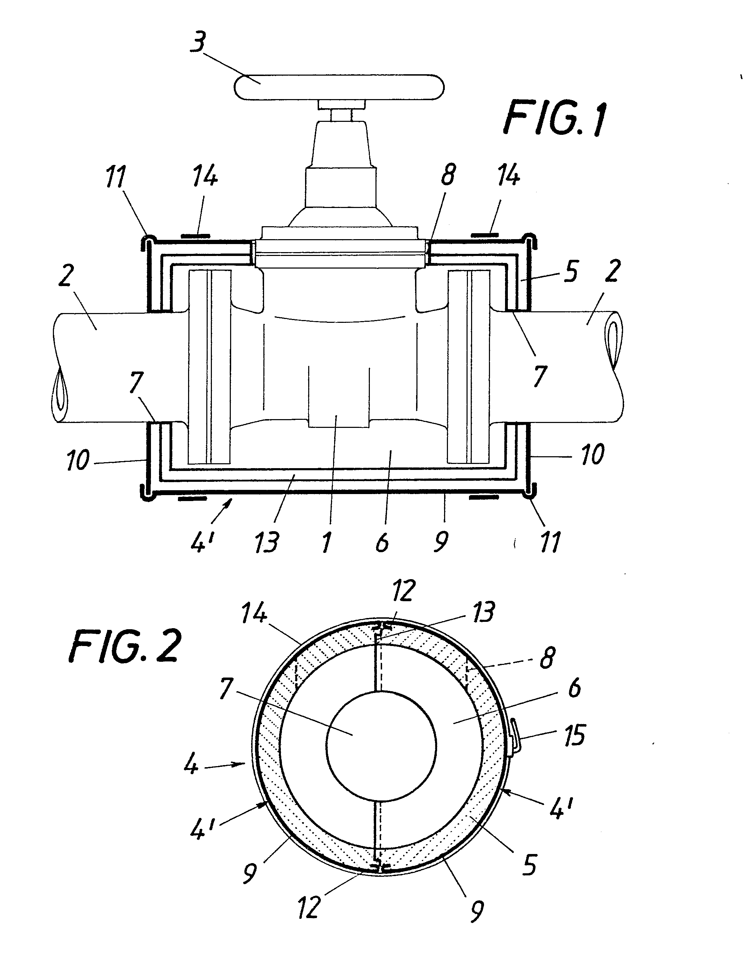

In der Zeichnung ist der Erfindungsgegenstand in einem Ausführungsbeispiel rein schematisch dargestellt, und zwar zeigen
Fig. 1 eine erst hälftig montierte erfindungsgemäße
    Fertigisolierung in Ansicht und
Fig. 2 einen Querschnitt durch eine erfindungsgemäße
    Fertigisolierung im unmontierten Zustand.

Zur Isolierung eines Absperrorganes 1, das in einer Rohrleitung 2 eingebaut ist und zur Betätigung ein Handrad 3 aufweist, gibt es ein zweigeteiltes Blechgehäuse 4, in das eine isolierende Innenauskleidung 5 eingeschäumt ist. Diese Innenauskleidung 5 bildet einen Hohlraum 6 zur Aufnahme des Absperrorganes 1, wobei Ausnehmungen 7, 8 den Durchtritt der Rohrleitung 2 sowie des Handrades 3 ermöglichen.

Jeder der beiden Blechgehäuseteile 4' besteht aus einer halbzylindrischen Schale 9 und Stirnwänden 10, welche Stirnwände 10 in Falzrändern 11 der Schale 9 eingesetzt und in diesen über die eingeschäumte Innenauskleidung 5 fixiert sind. Die freien Ränder 12 von Schale 9 und Stirnwänden 10 sind umgebördelt, damit der Schaumstoff der Innenauskleidung in diese Bördelung eindringen kann und sich eine gute Verbindung zwischen Blech und Schaumstoff ergibt. Die Innenauskleidung 5 bildet außerdem in der Trennfläche einen rundumlaufenden Stufenfalz 13, wodurch eine einwandfreie Zuordnung der beiden Blechgehäuseteile 4' und damit auch ein gut schließendes Blechgehäuse 4 gewährleistet ist. Für den Zusammenhalt des Blechgehäuses 4 sorgen Metallbänder 14, die Spannverschlüsse 15 tragen und so die Blechgehäuseteile 4' gut zusammenspannen können.

Die erfindungsgemäße Fertigisolierung erlaubt eine einfache, wirkungsvolle Außenisolierung verschiedener heizungs - oder kältetechnischen Einrichtungen und zeichnet sich durch ihre Widerstandsfähigkeit, Feuerbeständigkeit und nicht zuletzt durch ihre Wirtschaftlichkeit aus.

Patentansprüche:

1.    Wärmeisolierung aus Schaumstoff für **wärme**-technische Einrichtungen, wie Absperrorgane (1),Behälter u. dgl., gekennzeichnet durch ein längsgeteiltes, Ausnehmungen (7, 8) zum Durchtritt von Armaturen, Leitungen od. dgl. aufweisendes Blechgehäuse (4), in das der Schaumstoff als den Abmessungen der Einrichtung angepaßte Innenauskleidung (5) eingeschäumt ist.

2.    Wärmeisolierung nach Anspruch 1, dadurch gekennzeichnet, daß die freien Ränder  (12) der Blechgehäuseteile (4') umgebördelt sind.

3.    Wärmeisolierung nach Anspruch 1 oder 2, dadurch gekennzeichnet, daß die Blechgehäuseteile (4') aus einer vorzugsweise halbzylindrischen Schale (9) und sich an Falzrändern (11) dieser Schale abstützenden, über die eingeschäumte Innenauskleidung (5) befestigten Stirnwänden (10) bestehen.

4.    Wärmeisolierung nach einem der Ansprüche 1 bis 3, dadurch gekennzeichnet, daß die Innenauskleidung (5) in der Teilungsfläche einen Stufenfalz (13) bildet.

5.    Wärmeisolierung nach einem der Ansprüche 1 bis 4, dadurch gekennzeichnet, daß zur gegenseitigen Verbindung der Blechgehäuseteile (4') Metallbänder (14) mit Spannverschlüssen (15) vorgesehen sind.

0108856

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 461 192 (V. JANNA) <br> * Seite 1, Zeile 7 - Seite 2, Zeile 11; Figuren 1-3 * | 1-5 | F 16 L 59/02 <br> F 16 L 59/16 |
| | --- | | |
| Y | EP-A-0 041 900 (SOFRADI) <br> * Zusammenfassung * | 1 | |
| | --- | | |
| A | FR-A-2 184 678 (CHEM. WERKE HÖLS) <br> * Ansprüche 1-5 * | 1 | |
| | ----- | | |

**RECHERCHIERTE SACHGEBIETE (Int. Cl. ³)**

F 16 L

Der vorliegende Recherchenbericht wurde für alle Patentansprüche erstellt.

| Recherchenort <br> DEN HAAG | Abschlußdatum der Recherche <br> 05-07-1983 | Prüfer <br> SCHAEFFLER C.A.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82